# EUROPEAN PATENT APPLICATION

(11) **EP 2 990 897 A1**
(43) Date of publication of application: **02.03.2016**
(21) Application number: 15182712.8
(22) Date of filing: 27.08.2015
(51) Int. Cl.: G05B 19/4093, B23H 7/20

(54) **WIRE CUT DISCHARGE MACHINE WITH MACHINING INFORMATION MANAGEMENT FUNCTION**

(30) Priority: 29.08.2014 JP 2014174884
(71) Applicant: FANUC CORPORATION, Oshino-mura Minamitsuru-gun Yamanashi 401-0597 (JP)
(72) Inventor: YAMAGUCHI, Meguru, Minamitsuru-gun, Yamanashi 401-0597 (JP); NIU, Yan, Minamitsuru-gun, Yamanashi 401-0597 (JP)
(74) Representative: Ward, James Norman

(57) **Abstract**

A control unit of a wire cut discharge machine with machining information management function determines an item set to be a facility setting item and inhibits change of the setting value of the item set to be the facility setting item, when a machining information stored in a machining information storing unit is called to and all setting values of the called machining information are set altogether.

## Description

### BACKGROUND OF THE INVENTION

### 1. Field of the Invention

The present invention relates to a wire cut discharge machine, and more particularly to a wire cut discharge machine with machining information management function for inhibiting change of facility setting when machining information is updated.

### 2. Description of the Related Art

Various settings such as setting of machining program, a parameter for discharging, temperature, specific resistance, and the like, are needed for wire discharging. The setting items are so many and the setting contents are so complicated that the settings are usually executed on a plurality of screens individually. Consequently, it takes time to execute the complicated settings even when the same product is machined, taking long preparation time before starting the machining, often causing setting errors, increasing burden on an operator, and decreasing machining efficiency.

In order to solve these problems, techniques are proposed in that the machinery drawings of product, information of electrodes, information of a product to be machined, location information of the product to be machined and the like are stored in a lump and settings are changed in a lump using the stored information if needed, as a conventional techniques.

Japanese Patent Laid-Open No. 05-023915 discloses a wire cut discharge machine in which, for the sake of making continuous processing easy in a case where many combinations of machining plate thickness and worked surface roughness, machining information is automatically searched based on a preset parameter, the searched machining information is arranged in machining order according to predetermined rule, and parameter such as offset amount is automatically calculated, to generate machining condition.

Japanese Patent Laid-Open No. 2002-036031 discloses a wire cut discharge machine in which, all machining information such as machinery drawings of a workpiece, information of electrodes is stored altogether, and the settings are changed altogether.

In addition to that, Japanese Patent Laid-Open No. 2007-286960 discloses a wire cut discharge machine configured to extract, store, and look up information of machining state on a screen in order to transmit information of record of machining command or processing history, among different operators.

Moreover, Japanese Patent Laid-Open No. 62-208829 discloses a wire cut discharge machine storing and displaying information of wire electrode diameter, workpiece plate thickness and material of a workpiece in association with each other, to save the work to check by looking each wire electrode diameter, workpiece plate thickness, material of a workpiece, and the like.

However, machining needs to be performed with facility setting of machinery maintained, when similar machining is performed in the different machinery. That is, change of the facility needs to be inhibited. In this case, execution of the function to change machining information altogether, as described in the prior art, results in change of the facility setting which should not be changed. This brings a big problem in processing factory floor and the problem is not solved in the patent literatures described above.

For example, the technique described in Japanese Patent Laid-Open No. 05-023915 enables easy setting of machining information of each kind of products, but does not solve the problem of the trouble of setting for a product of the same kind. In the technique described in Japanese Patent Laid-Open No. 2002-036031, when the same kind of product is machined in the different machinery, change of the facility setting greatly influences machining accuracy and reproducibility, and causes great confusion in the processing factory floor, since the facility setting is set on bases of a preset rule for each machinery.

In the technique described in Japanese Patent Laid-Open No. 2007-286960, the information to be collected is severely limited to the information of condition of the machining states on a screen. In addition to that, the technique transmit the machining information or the processing history, so the technique is not expected to have time reduction effect of machining preparation or the like. Furthermore, the technique described in Japanese Patent Laid-Open No. 62-208829 only focuses on the discharging parameter, and has a defect of not having ability to manage the machining information, which has great influence on the other machining result.

### SUMMARY OF THE INVENTION

Therefore, the object of the invention is to provide a wire cut discharge machine with machining information management function, the machining information management function being the function to inhibit change of the facility setting when the facility setting is set for each machinery and the machining information is updated.

A wire cut discharge machine with machining information management function, according to the present invention includes a machining information setting unit configured to set a plurality of groups of machining parameters including at least a machining program and a discharging parameter, a machining information storing unit configured to store the machining parameters and an identification information in association with each other, and a machining information calling unit configured to call the machining information stored in the machining information storing unit and set the machining information in the machining information setting unit. The machining information calling unit includes a facility setting unit configured to set an item in the machining information, set in the machining information setting unit, to be a facility setting item, change of the facility setting being inhibited, and cancel the item from the facility setting, and a control unit configured to determine the item set to be the facility setting item and inhibit change of the setting value of the item set to be the facility setting item, when the machining information stored in the machining information storing unit is called to and all setting values of the called machining information are set altogether.

The control unit may include a calling information selection unit configured to select and change the value of, an item other than the item set to be the facility item.

The machining information may include setting information of at least one of, temperature, specific resistance, feed control, cornering control, and approaching control.

The machining information before being updated by the machining information calling unit may be automatically stored in the machining information storing unit.

The machining information storing unit may store as the machining information, a machining result of a workpiece, including form accuracy, plane roughness, and machining time duration of the workpiece when the workpiece is machined based on the machining information.

The machining information called by the machining information calling unit may be displayed using at least one of characters, a figure and a table.

The present invention with the above configuration inhibits unconsidered change of facility settings of each machinery, while the machining information is managed such that the facility information is not changed when the machining information is changed altogether for reducing machining preparation time and minimizing the probability of making setting error.

In addition to that, various needs in a production site are flexibly responded to and simple management of the machining information is enabled since an item to be changed is configured to be selected and searched machining information is previewed.

### BRIEF DESCRIPTION OF THE DRAWINGS

The above-described object, the other object, and the feature of the invention will be proved from the description of embodiments below with reference to the accompanying drawings. In these drawings:
FIG. 1 is a schematic diagram showing a brief overview of machining information setting procedure in some embodiments of the present invention.
FIG. 2 is a functional block diagram of wire cut discharge machines in some embodiments of the present invention.
FIG. 3 is a flowchart of process to change machining information while maintaining facility setting in the first embodiment of the present invention.
FIG 4 is an illustrative drawing of machining information storing process in the second embodiment of the present invention.
FIG. 5 is an illustrative drawing of machining information selection / change process of the second embodiment of the present invention.
FIG. 6 is a flowchart of machining information selection / change process in the second embodiment of the present invention.
FIG. 7 is an illustrative drawing of temporary saving process of machining information in the third embodiment of the present invention.
FIGS. 8A and 8B are flowcharts of temporary saving process of machining information in the third embodiment of the present invention.
FIG. 9 shows an example of displayed machining information of the third embodiment of the present invention.
FIG. 10 is a flowchart of machining information displaying and selection process in the third embodiment of the present invention.

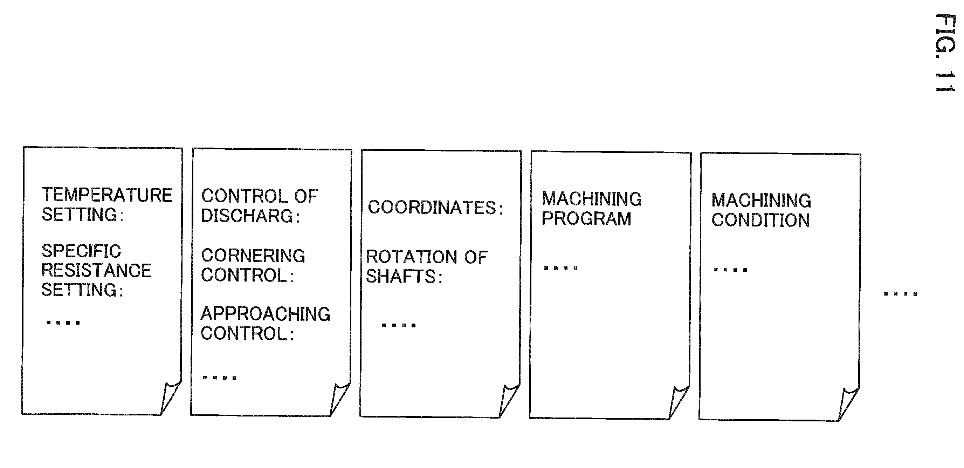

FIG. 11 shows an example of machining information of a wire cut discharge machine.

### DETAILED DESCRIPTION OF THE PREFERRED EMBODIMENTS

Brief overview of the present invention will be provided first. A wire cut discharge machine with machining information management function is provided in the present invention. The machining information management function is the function to inhibit change of the facility setting when the facility setting is set for each machinery and the machining information is updated.

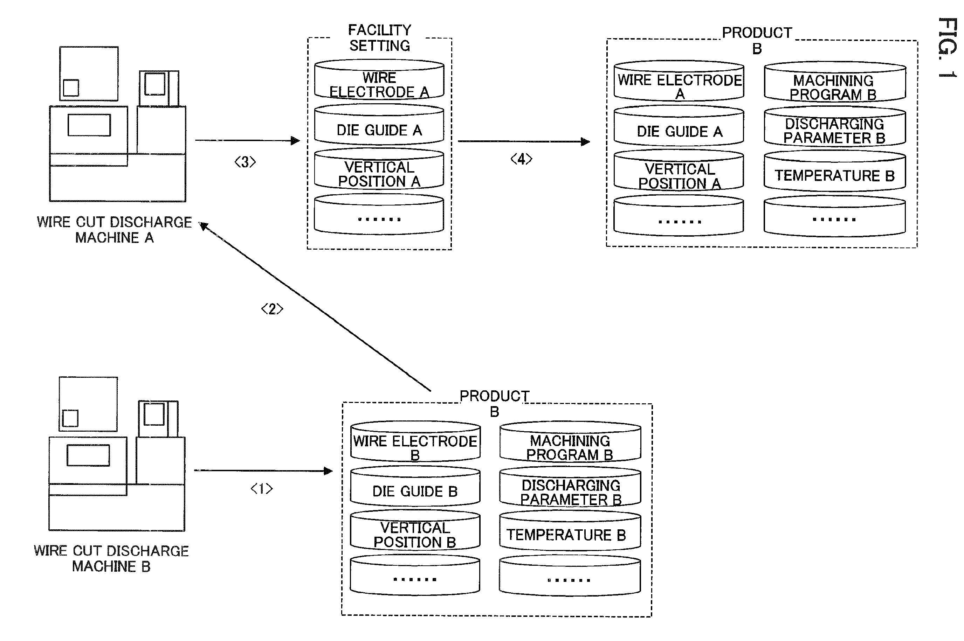

As shown in FIG. 1, <1> machining information, which is set when a product B is machined in a wire cut discharge machine B, is stored in a block. <2> When the product B is machined in a wire cut discharge machine A which is different from the wire cut discharge machine B, <3> the wire cut discharge machine A takes in the machining information stored in the wire cut discharge machine B, and <4> without changing the facility setting of the wire cut discharge machine A, the other setting is changed by getting information of the other setting from the machining information. This configuration makes it possible to avoid unconsidered change of facility settings while reducing machining preparation time and minimizing the probability of making setting error.

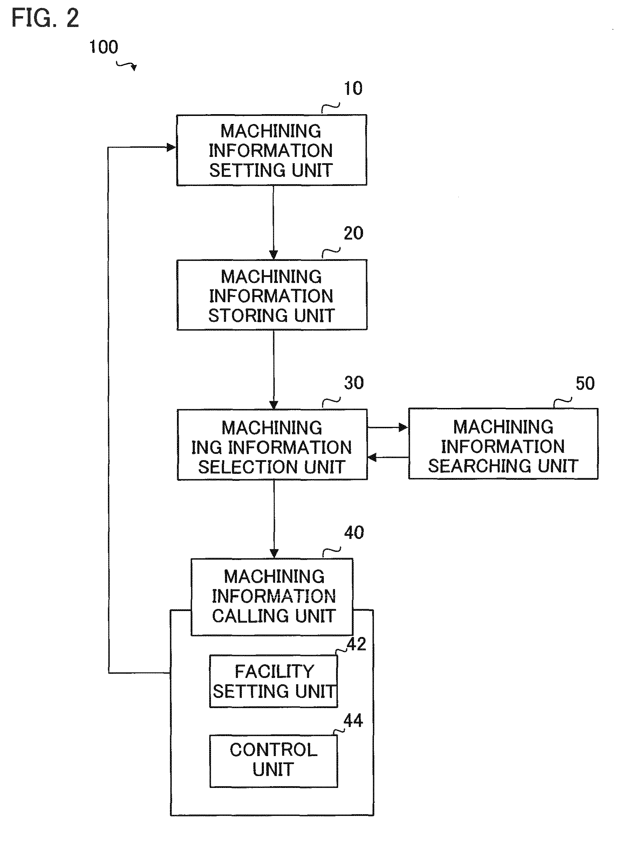

FIG. 2 is a functional block diagram of a wire cut discharge machine 100 in some embodiments of the present invention. The wire cut discharge machine 100 includes a machining information setting unit 10, a machining information storing unit 20, a machining information selection unit 30, a machining information calling unit 40, a machining information searching unit 50. The wire cut discharge machine 100 further includes a facility setting unit 42 and a control unit 44 as a sub-function block of the machining information calling unit.

The machining information setting unit 10 sets machining program, discharging parameter, temperature, specific resistance or the like in the wire cut discharge machine 100, while storing the various kinds of the set machining data in the machining information storing unit 20. The setting value may be input by a console panel or an external devices not shown in the figure, or the value of the item which is taken in via the machining information calling unit 40 may be set.

The machining information storing unit 20 stores the machining information which is a group of machining program, discharging parameter, temperature, specific resistance, selected by the operator, in association with the identification number. The machining information storing unit 20 is configured to store a plurality of the groups of the machining information, and the group is read out using the identification number when the group is called from the outside. Here, any information that uniquely identifies the machining information, such as a product name, a serial number which is uniquely identified in a processing factory, may be used.

The machining information selection unit 30 is configured to select machining information from a plurality of groups of machining information stored in the machining information storing unit 20. Selection by the machining information selection unit 30 may be configured such that, an operator manipulates to select the machining information, or the machining information is automatically selected based on the other information set in the wire cut discharge machine.

The machining information calling unit 40 has function of calling an item of the machining information and set the item in the machining information setting unit 10. The facility setting unit 42 and the control unit 44 is installed in the wire cut discharge machine, as a sub-function block. The facility setting unit 42 sets an item in the machining information set by the machining information setting unit 10, to be a facility setting item, and cancels the item from the facility setting. Here, change of the facility setting value is inhibited. The facility setting unit may be configured such that an operator sets the item by a console board or an external device by hand.

The control device 44 has function of calling the machining information stored in the machining information storing unit 20, and setting the setting value of all the called machining information altogether. The control device discriminates the item set to be the facility setting by the facility setting unit 42, and controls not to change the setting value of the item set to be the facility setting, when the control device sets the setting value.

The machining information selectin unit calls the machining information searching unit 50 based on manipulation of an operator or the like, and the machining information searching unit 50 searches machining information stored in the machining information storing unit 20. Identification information of the machining information or a machining parameter may be configured to be received as a searching key from the operator.

Specific examples using the wire cut discharge machine 100 with above configuration and changing the machining information while maintaining the configuration setting will be described below.

### < First Embodiment >

In the present embodiment, an example, in which the machining information is changed while the configuration setting is maintained, will be described.

In the present embodiment, as shown in FIG. 1, <1> a product B is machined and the machining information is stored first. Specifically, machining program B, a wire electrode B, a die guide B, vertical position B and the like are set in the machining information by the machining information setting unit 10, and the machining information is stored in the machining information storing unit 20 comprising storage region of the machinery or an external storage device, when the wire cut discharge machine B machines the product B.

In the next step, <2> when the product B is machined in a wire cut discharge machine A, <3> the wire cut discharge machine A refers the machining information of the product B stored in the machining information storing unit 20 using an external storage device or a communication tool, and takes in the machining information selected by the machining information selection unit 30.

<4> the machining information, except for the facility setting, is changed. More specifically, an item of the machining information, the change of the item is to be inhibited, is set to be facility setting, using the facility setting unit 42. Then, the machining information of the product B, taken in except for the machining information of the facility setting, is used to change the setting value altogether and the machining is performed.

Machining with these steps makes it possible to avoid change of the facility settings of each machinery while significantly reducing machining preparation time and securing machining accuracy and reproducibility, when the same kind of the product is machine in the different machinery.

The case, where the facility setting is set after the wire cut discharge machine A takes in the machining information, is explained here, but the facility setting may be configured to be set at various time of initial setting of the machinery, just after the machining information is taken in, just before the machining information is changed, or the like.

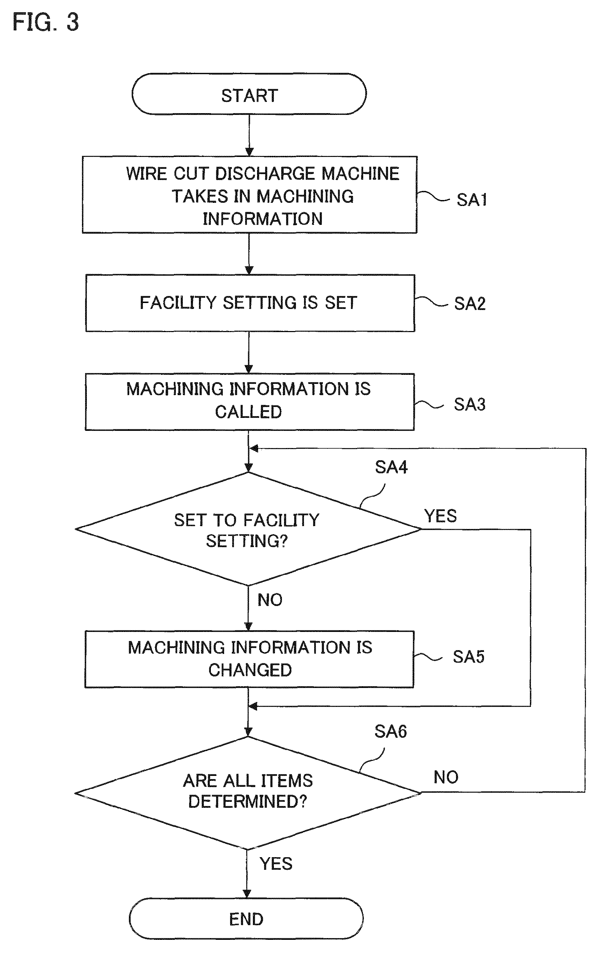

FIG. 3 is a flowchart of process to change machining information while maintaining facility setting in the present embodiment.
[Step SA1] The wire cut discharge machine takes in the machining information which is stored.
[Step SA2] The facility setting is set according to predetermined rule.
[Step SA3] The machining information taken in is called by the machining information calling unit 40.
[Step SA4] It is determined whether each item composing the called machining information is set to be the facility setting. The process proceeds to Step SA5 when the item is not set to be the facility setting, and proceeds to Step SA6 when the item is set to be the facility setting.
[Step SA5] The machining information is changed.
[Step SA6] It is determined whether all the items are determined. The process ends when all the items are determined, and returns to Step SA4 when an item to be determined remains.

### < Second Embodiment >

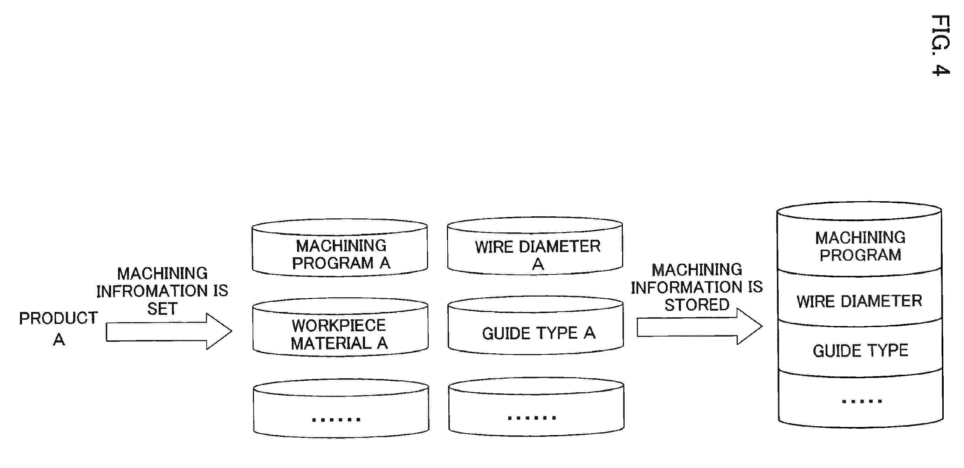

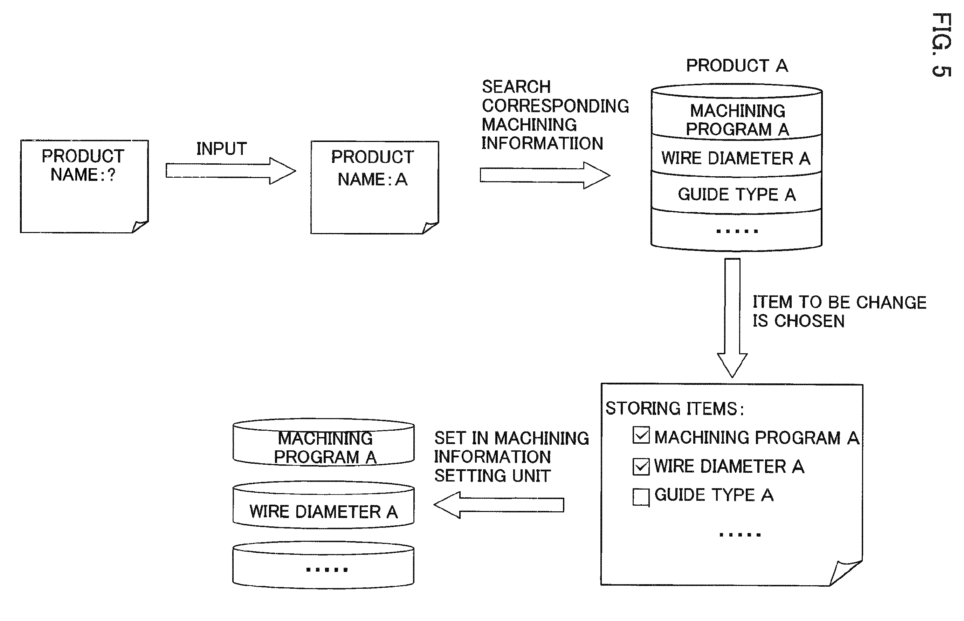

In the present embodiment, an example in which an item of the machining information except for the facility setting is selected and changed if necessary, when the same kind of the product is machined, is explained using FIGS. 4 and 5.

As shown in FIG. 4, machining program A, wire diameter A, material of a workpiece A and guide type A are set by the machining information setting unit 10, and stored by the machining information storing unit 20 based on the command issued by the machining information setting unit 10.

Then, as shown in FIG. 5, the machining information searching unit 50 searches the machining information, based on the identification number such as product name set when the machining information storing unit 20 stores the information previously, and the machining information selection unit 30 selects an item of the searched machining information necessary according to the needs in the machining factory. In this way, the machining information stored is timely read out and used when the product A, whose data is stored in advance, is machined.

Here, the item set to be the facility setting by the facility setting unit 42 may be displayed in the state where selection of the item is inhibited.

Then, the item of the machining information, which is called by the machining information calling unit 40, is set in the machining information setting unit 10. With this configuration, the machining preparation time is effectively reduced, while flexibly corresponding to the needs in the machining factory and minimizing the setting errors.

In the present embodiment, the item set to be the facility setting is displayed in the state where selection of the item is inhibited, but alternatively, the item set to be the facility setting may not be displayed on a screen.

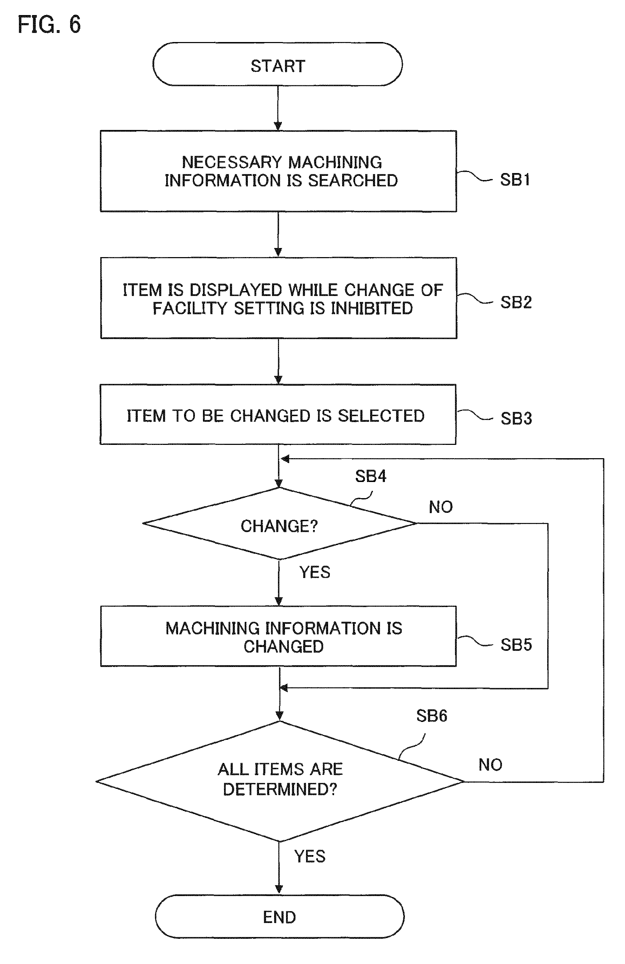

FIG. 6 is a flowchart of machining information selection / change process in the present embodiment.
[Step SB1] Necessary machining information is automatically searched by the machining information searching unit 50, based on the identification information of the product.
[Step SB2] The item of the machining information is displayed on a screen of the machinery in the state where the item except for the facility setting can be selected.
[Step SB3] An operator selects an item to be changed.
[Step SB4] It is determined whether to change each value of the item of the machining information selected by the operator to a value of the corresponding item in the searched machining information or not. The process proceeds to Step SB5 when the value is changed, and proceeds to Step SB6 if not.
[Step SB5] The information corresponding to the selected item of the machining information is set in the machining information setting unit 10 by the machining information calling unit 40.
[Step SB6] It is determined whether all the items are determined or not. The process ends when the all item are determined, and returns to Step SB4 when an item to be determined remains.

### < Third Embodiment >

In the embodiment, an example in which the wire cut discharge machine is recovered to the state before the machining information is changed.

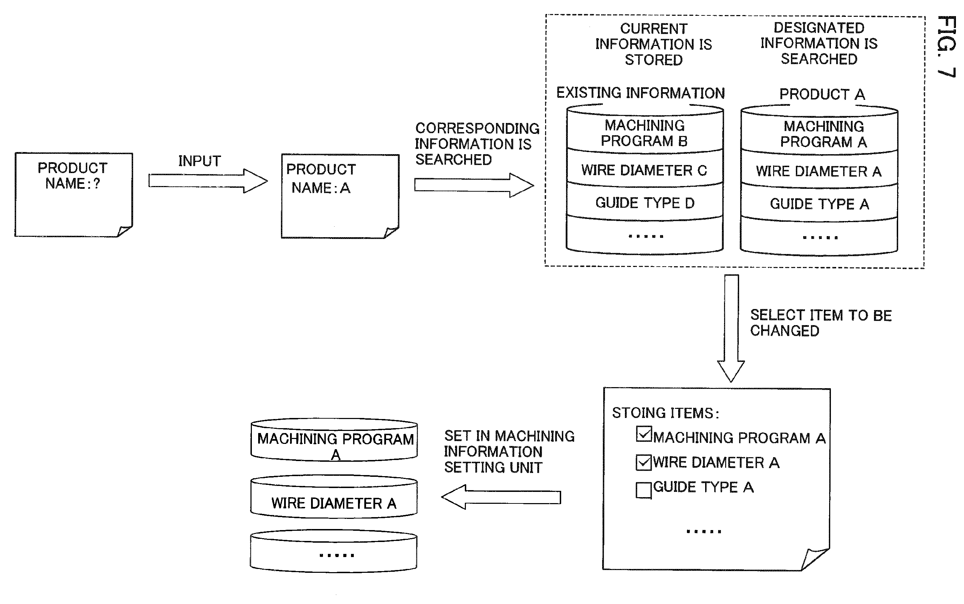

As shown in FIG. 7, the machining information of the product A is searched and called at the same time the present machining information set in the wire cut discharge machine is stored in a temporary storage region of the machining information storing unit 20, when the product A is machined whose machining information is stored. Then, after the machining of the product A is completed, the operator set by manipulation the existing machining information from the temporary storage region if necessary. With this configuration, the wire cut discharge machine is recovered from the state after the machining information is changed to the original state.

With the function mentioned above, the wire cut discharge machine is configured to easily recover to the machining information setting state just before the change, and efficiently recover to its former state when the setting error occurs, so the operator can change the machining information at ease.

In the present information, an example, in which the current machining information is stored at the time when the machining information is searched, has been explained, but alternatively, the machining information at the time of beginning of the machining or the end of the machining may be configured to be stored as an existing information, and may be prepared for the next change of the machining condition.

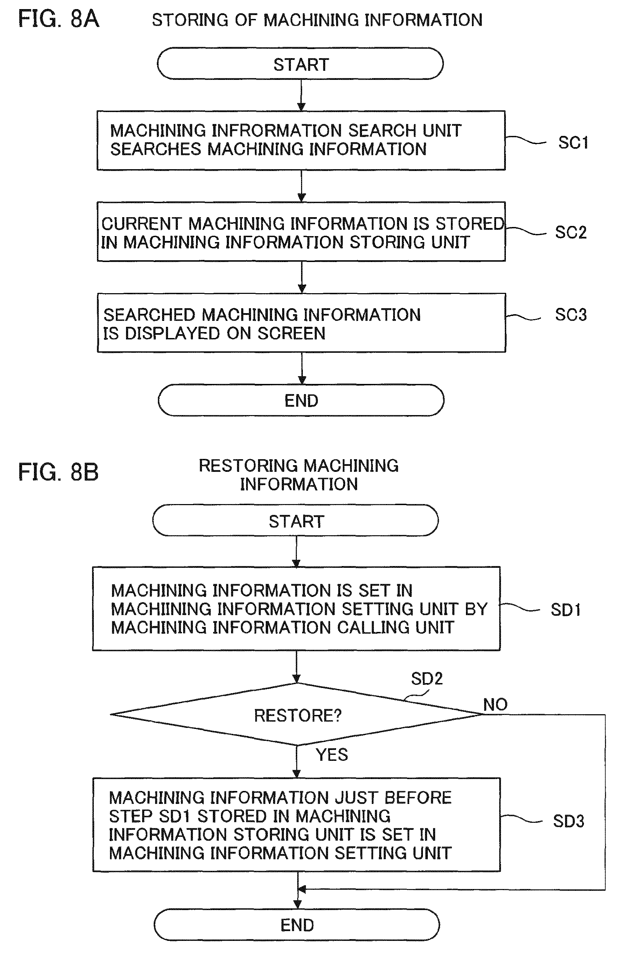

FIGS. 8A and 8B are flowcharts of saving the current machining information and restoring the machining information in the present invention.
<1> Storing process of the current machining information
   [Step SC1] An operator searches the machining information using the machining information searching unit 50.
   [Step SC2] The current machining information is automatically stored in the machining information storing unit 20.
   [Step SC3] The machining information searched by the machining information searching unit 50 is displayed on a screen.
<2> Restoring process of the machining information
   [Step SD1] The machining information is set in the machining information setting unit 10 by the machining information calling unit 40.
   [Step SD2] An operator determines whether to recover to the machining information setting state just before the step SD1 if necessary. The process proceeds to Step SD3 when the recovery is performed, and the process ends when the recovery is not performed.
   [Step SD3] The machining information just before Step SD1, stored in the machining information storing unit 20, is set in the machining information setting unit 10.

### <Fourth Embodiment>

In the present embodiment, an example where selected machining information is configured to be easily confirmed by characters, a figure or a table, after the machining information is selected by the machining information selection unit 30.

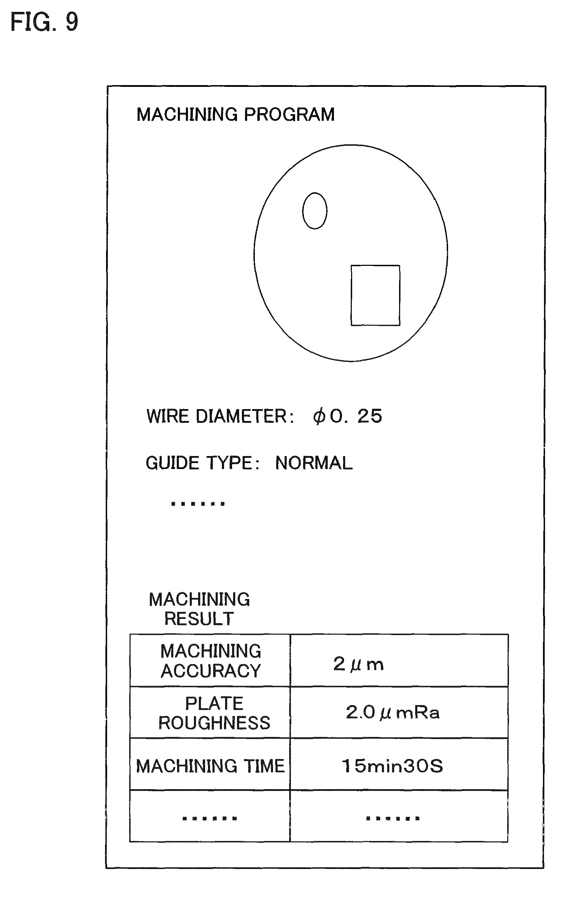

FIG. 9 shows an example of displayed machining information in the present embodiment. As shown in FIG. 9, a machining configuration is generated and drawn to be displayed, by executing machining pass simulation process for the machining program read in. The machining configuration is intuitively confirmed and selection error of the machining information is avoided, since the machining configuration is displayed in this way.

Concerning the machining result, the machining results of the previous machining performed based on the machining information are stored in association with the machining information, and displayed in a table. Necessary information such as machining time is plainly expressed in this way, and the machining preparation time is reduced as a result.

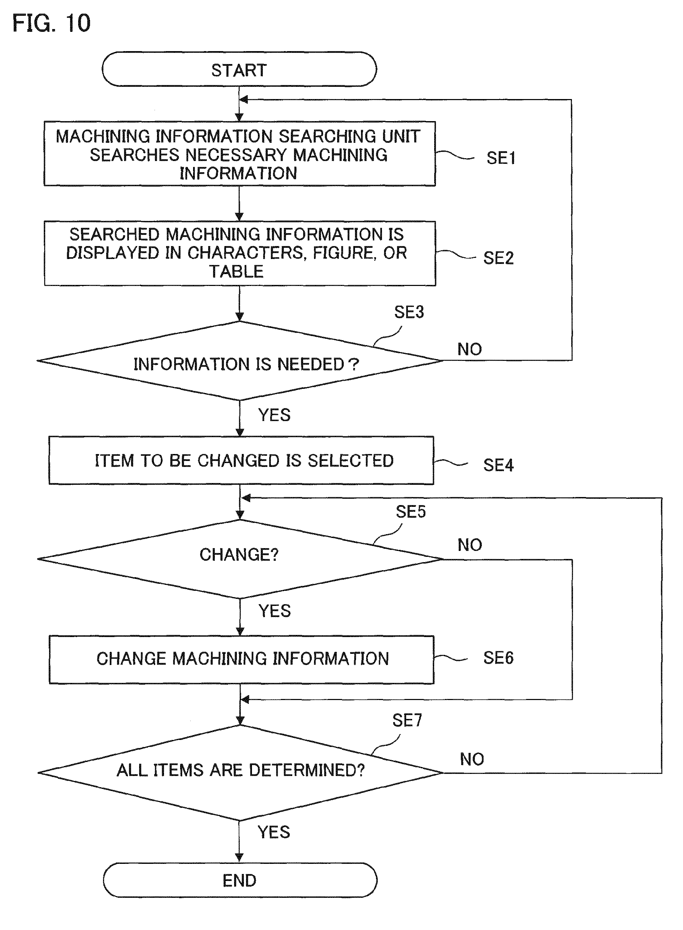

FIG. 10 is a flowchart of preview displaying process of the machining information in the present embodiment.
[Step SE1] Necessary machining information is automatically searched by the machining information searching unit 50, using the identification information of the product.
[Step SE2] Searched machining information is displayed in characters, a figure, a table or the like.
[Step SE3] An operator determines whether the displayed machining information is necessary or not, and the process proceeds to Step SE4 when the machining information is necessary, and the process returns to Step SE1 when the machining information is not necessary.
[Step SE4] The operator selects an item of the machining information to be changed.
[Step SE5] The operator determines whether to change each item of the machining information or not, and the process proceeds to Step SE6 when the operator determines to change the item, and the process proceeds to Step SE 7 when the operator determines not to change the item.
[Step SE6] The selected machining information is set in the machining information setting unit 10 by the machining information calling unit 40.
[Step SE7] It is determined whether all the items are determined. The process ends when all the items are determined, and returns to Step SE5 when the item to be determined remains.

Wire diameter, material of a workpiece, guide type, and program are exemplified in the embodiment of the present invention. In addition to these information, information concerning coordinates of shafts, machining conditions, manipulation including various kinds of functions for facilitated operation, cornering control for improving machining accuracy and machining time efficiency, controlling such as an approaching control or taper correction, and machining result itself of the machining based on the machining information, may be also stored.

Information of additional shaft may be stored in addition to the various kinds of information, when one or two additional shafts including a rotating shaft are used.

The machining information to be stored by the machining information storing unit 20 is normally stored in the control device of the machinery, but the machining information may be stored in the external storage device, or read in from the external storage device, when the cumulative storage amount of data is large.

## Claims

1. A wire cut discharge machine with machining information management function, comprising:
a machining information setting unit configured to set a plurality of groups of machining parameters including at least a machining program and a discharging parameter;
a machining information storing unit configured to store the machining parameters and an identification information in association with each other; and
a machining information calling unit configured to call the machining information stored in the machining information storing unit and set the machining information in the machining information setting unit; wherein
the machining information calling unit comprising:
a facility setting unit configured to
set an item in the machining information, set in the machining information setting unit, to be a facility setting item, change of the facility setting being inhibited, and
cancel the item from the facility setting; and
a control unit configured to determine the item set to be the facility setting item and inhibit change of the setting value of the item set to be the facility setting item, when the machining information stored in the machining information storing unit is called to and all setting values of the called machining information are set altogether.

2. A wire cut discharge machine with machining information management function according to claim 1, the control unit comprising:
a calling information selection unit configured to select and change the value of, an item other than the item set to be the facility item.

3. A wire cut discharge machine with machining information management function according to claim 1 or 2, the machining information includes setting information of at least one of, temperature, specific resistance, feed control, cornering control, and approaching control.

4. A wire cut discharge machine with machining information management function according to any one of claims 1 to 3, wherein the machining information before being updated by the machining information calling unit is configured to be automatically stored in the machining information storing unit.

5. A wire cut discharge machine with machining information management function according to any one of claims 1 to 4, wherein the machining information storing unit is configured to store as the machining information, a machining result of a workpiece, including form accuracy, plane roughness, and machining time duration of the workpiece when the workpiece is machined based on the machining information.

6. A wire cut discharge machine with machining information management function according to any one of claims 1 to 5, wherein the machining information by the machining information calling unit is configured to be displayed using at least one of characters, a figure and a table.
